# EUROPEAN PATENT SPECIFICATION

(11) **EP 2 439 022 B1**
(45) Date of publication and mention of the grant of the patent: **31.07.2013**
(21) Application number: 10013441.0
(22) Date of filing: 08.10.2010
(51) Int. Cl.: B25B 21/02, F16D 41/06

(54) **Bidirectional transmission power tool**
Elektrowerkzeug mit bidirektionaler Übertragung
Outil électrique à transmission bidirectionnelle

(43) Date of publication of application: 11.04.2012
(73) Proprietor: Hung, Fu-Tung, Beimen Township (TW); Winpower Energy Technology Company Limited, Kaohsiung City (TW)
(72) Inventor: Hung, Fu-Tung, Beimen Township, Tainan County (TW)
(74) Representative: Hauck Patent- und Rechtsanwälte

(56) References cited:
- EP-A2- 1 752 328
- DE-A1- 19 963 237
- FR-A- 1 301 611
- US-A1- 2003 173 178
- US-A1- 2009 078 523

## Description

### 1. Field of the Invention

The present invention relates to a power tool, and more particularly to a power tool that can be transmitted bidirectionally.

### 2. Description of Related Art

A transmitting device of a conventional power tool has a fixed base, a motor and a reduction device as known for example from US-A-2003/0173178. The motor is mounted on the fixed base and has a central shaft. The reduction device is connected to an output end of the central shaft of the motor. The transmitting device of the conventional power tool can be operated at two directions by switching the rotating direction of the central shaft of the motor. However, the reduction device of the conventional power tool is constructed by gear wheels, belts and other machine components, and the motor of the conventional power tool has to provide a large torsional force to drive the conventional power tool via the gear wheels, belts and the machine components of the reduction device. Thus, a large start-up electric current to drive the conventional power tool is needed but this is power-wasted.

In addition, the conventional power tool, such as a portable impact tool has an electric motor, a rotating device and an output device. The rotating device is connected to the electric motor and has an impact mount. The output device is connected to the rotating device and has a clamping head. The impact mount of the rotating device is driven by the electric motor to impact the clamping head of the output device to rotate a socket wrench that is connected to the clamping head. Thus, a bolt or a nut can be fastened or loosened. However, the impact operation of the conventional power tool will produce noises.

Furthermore, a conventional power tool may be driven by an electromagnetic force to decrease noises. The electromagnetic power tool usually has a stepper motor, an impact device and an output device. The stepper motor has a permanent magnet. The impact device is connected to the stepper motor. The output device is connected to the impact device and can be rotated by the electromagnetic force that provided by the stepper motor. However, the electromagnetic wave will cause during the operation of the conventional electromagnetic power tool and will influence the health of the user.

The bidirectional transmission power tool in accordance with the present invention mitigates or obviates the aforementioned problems.

The main objective of the present invention is to provide a power tool that can be transmitted power bidirectionally.

The bidirectional transmission power tool in accordance with the present invention has a power assembly, a bidirectional device, a transmitting device and an output device. The power device has a base and a top cover. The bidirectional device is mounted in the power device and has two unidirectional bearings. The unidirectional bearings are mounted in the base and each has a jacket hole and multiple actives recesses. The transmitting device is mounted in the base, is connected to the bidirectional device and has a transmitting jacket and a holding mount. The output device is mounted in the top cover, is connected to the transmitting device and has a transmitting shaft, a transmitting sheath and an output shaft.

Other objectives, advantages and novel features of the invention will become more apparent from the following detailed description when taken in conjunction with the accompanying drawings.

### IN THE DRAWINGS:

Fig. 1 is an exploded perspective view of a bidirectional transmission power tool in accordance with the present invention;
Fig. 2 is a side view in partial section of the bidirectional transmission power tool in Fig. 1;
Fig. 3 is a top view in partial section of the bidirectional transmission power tool along the line 3-3 in Fig. 2;
Fig. 4 is a top view in partial section of the bidirectional transmission power tool along the line 4-4 in Fig. 2; and
Fig. 5 is a top view in partial section of the bidirectional transmission power tool along the line 5-5 in Fig. 2.

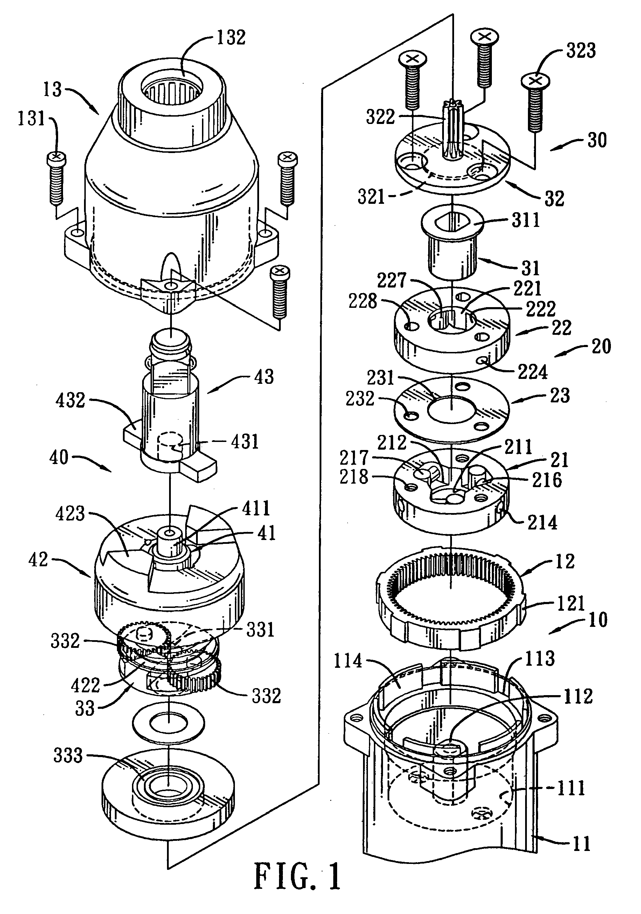

With reference to Figs. 1 to 5, a bidirectional transmission power tool in accordance with the present invention comprises a bidirectional transmission assembly and an output device 40. The bidirectional transmission assembly has a power device 10, a bidirectional device 20 and a transmitting device 30

The power device 10 has a base 11, an inner gear ring 12 and a top cover 13.

The base 11 has a bottom, a top, a mounting recess 111, a drive shaft 112, an opening 113 and multiple mounting plates 114. The mounting recess 111 is formed in the base 11 near the bottom of the base 11 and has a bottom. The drive shaft 112 may be noncircular and is rotatably mounted in and protrudes from the bottom of the mounting recess 111. The opening 113 is formed through the top of the base 11 and communicates with the mounting recess 111. The mounting plates 114 are formed on and protrude from the top of the base 11 at intervals around the opening 113.

The inner gear ring 12 is mounted in the opening 113 of the base 11 over the mounting recess 111, is connected to the mounting plates 114 of the base 11 and has an external surface, an internal surface, multiple mounting protrusions 121 and multiple teeth. The mounting protrusions 121 are formed on and protrude from the external surface of the inner gear ring 12 at intervals and are connected to the mounting plates 114 of the base 11. The teeth are formed on and protrude from the internal surface of the inner gear ring 12.

The top cover 13 is securely mounted on the base 11 and has a bottom, a top, multiple fasteners 131 and a shaft hole 132. The bottom of the top cover 13 is mounted on the top of the base 11 by the fasteners 131. The shaft hole 132 is formed through the top of the top cover 13.

The bidirectional device 20 is mounted in the power device 10 and has a first unidirectional bearing 21, a second unidirectional bearing 22 and a spacer 23.

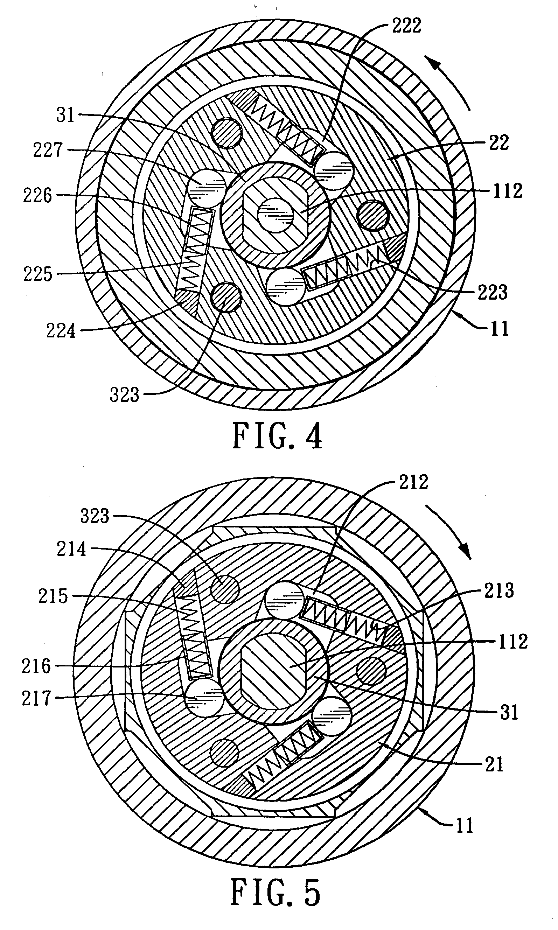

With further reference to Figs. 1 and 5, the first unidirectional bearing 21 is mounted in the mounting recess 111 of the base 11 and has a center, a top face, a bottom face, an outer surface, a jacket hole 211, multiple active recesses 212 and multiple threaded holes 218. The jacket hole 211 is formed through the center of the first unidirectional bearing 21 at the bottom face of the first unidirectional bearing 21 and is mounted around the drive shaft 112 of the base 11.

The active recesses 212 are formed through the top face of the first unidirectional bearing 21 and communicate with the jacket hole 211. Each active recess 212 has a channel 213, a wide segment, a narrow segment, a closed block 214, a spring 215, a mounting tube 216 and a clutch post 217. The channel 213 of the active recess 212 is formed through the first unidirectional bearing 21 from the active recess 212 to the outer surface of the first unidirectional bearing 21, communicates with the active recess 212 and has an outer end and an inner end. The outer end of the channel 213 is formed through the outer surface of the first unidirectional bearing 21. The wide segment of the active recess 212 is defined in the active recess 212 and communicates with the inner end of the channel 213. The narrow segment of the active recess 212 is defined in the active recess 212 away from the channel 213 and communicates with the wide segment of the active recess 212. The closed block 214 is mounted in and closes the outer end of the channel 213. The spring 215 is mounted in the channel 213 and has two ends. One of the ends of the spring 215 abuts the closed block 214 and the other end of the spring 215 extends out of the inner end of the channel 213 and into the active recess 212. The mounting tube 216 is mounted around the end of the spring 215 that extends out of the inner end of the channel 213. The clutch post 217 may be cylindrical, is mounted in the narrow segment of the active recess 212 and abuts the mounting tube 216.

The threaded holes 218 are formed through the top face and the bottom face of the first unidirectional bearing 21 between the active recesses212.

With further reference to Figs. 1 and 4, the second unidirectional bearing 22 is mounted in the mounting recess 111 of the base 11 above the first unidirectional bearing 21 and has a center, a top face, a bottom face, an outer surface, a jacket hole 221, multiple active recesses 222 and multiple through holes 228. The jacket hole 221 is formed through the center of the second unidirectional bearing 22 at the top face of the second unidirectional bearing 22 and is mounted around the drive shaft 112 of the base 11.

The active recesses 222 are formed through the bottom face of the second unidirectional bearing 22 and communicate with the jacket hole 221. Each active recess 222has a channel 223, a wide segment, a narrow segment, a closed block 224, a spring 225, a mounting tube 226 and a clutch post 227. The channel 223 of the active recess 222 is formed through the second unidirectional bearing 22 from the active recess 222 to the outer surface of the second unidirectional bearing 22, communicates with the active recess 222 and has an outer end and an inner end. The outer end of the channel 223 is formed through the outer surface of the second unidirectional bearing 22. The wide segment of the active recess 222 is defined in the active recess 222 and communicates with the inner end of the channel 223. The narrow segment of the active recess 222 is defined in the active recess 222 away from the channel 223 and communicates with the wide segment of the active recess 222. The closed block 224 is mounted in and closes the outer end of the channel 223. The spring 225 is mounted in the channel 223 and has two ends. One of the ends of the spring 225 abuts the closed block 224 and the other end of the spring 225 extends out of the inner end of the channel 223 and into the active recess 222. The mounting tube 226 is mounted around the end of the spring 225 that extends out of the inner end of the channel 223. The clutch post 227 may be cylindrical, is mounted in the narrow segment of the active recess 222 and abuts the mounting tube 226.

The through holes 228 are formed through the top face and the bottom face of the second unidirectional bearing 22 between the active recesses 222 and align respectively with the threaded holes 218 of the first unidirectional bearing 21.

The spacer 23 is mounted in the mounting recess 111 of the base 11 between the unidirectional bearings 21, 22 and has a central hole 231 and multiple spacer holes 232. The central hole 231 is formed through the spacer 23, is mounted around the drive shaft 112 of the base 11 and aligns with the jacket holes 211, 221 of the unidirectional bearings 21, 22. The spacer holes 232 are formed through the spacer 23 around the central hole 231 and align respectively with the through holes 228 of the second unidirectional bearing 22 and the threaded holes 218 of the first unidirectional bearing 21.

The transmitting device 30 is mounted in the base 11 of the power device 10, is connected to the bidirectional device 20 and has a transmitting jacket 31, a holding mount 32 and a reduction mount 33.

The transmitting jacket 31 is securely mounted around the drive shaft 112 of the base 11 in the jacket holes 211, 221 of the unidirectional bearings 21, 22 and the central hole 231 of the spacer 23, abuts the clutch posts 217, 227 of the unidirectional bearings 21, 22 and has an external surface, a top end and a position board 311. The external surface of the transmitting jacket 31 abuts the clutch posts 217, 227 of the unidirectional bearings 21, 22. The position board 311 is formed on the top end of the transmitting jacket 31 and abuts the top face of the second the second unidirectional bearing 22.

The holding mount 32 is mounted on the top end of the transmitting jacket 31, is securely connected to the bidirectional device 20 and has a bottom, a top, a center, a position recess 321, a gear shaft 322 and multiple bolts 323. The position recess 321 is formed in the bottom of the holding mount 32 and is mounted around the position board 311 of the transmitting jacket 31 to provide a stable transmission between the transmitting jacket 31, the unidirectional bearings 21, 22 of the bidirectional device 20 and the holding mount 32. The gear shaft 322 is formed on and protrudes from the top of the holding mount 32 at the center of the holding mount 32. The bolts 323 are respectively mounted through the holding mount 32, the through holes 228 of the second unidirectional bearing 22 and the spacer holes 232 of the spacer 23 and are respectively screwed into the threaded holes 218 of the first unidirectional bearing 21 to combine the holding mount 32 securely with the unidirectional bearing 21, 22 and the spacer 23.

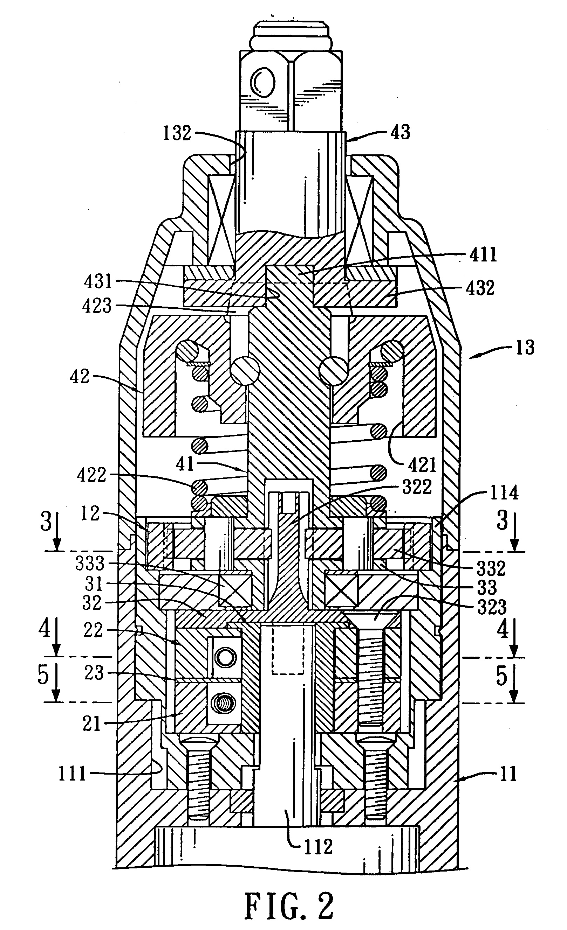

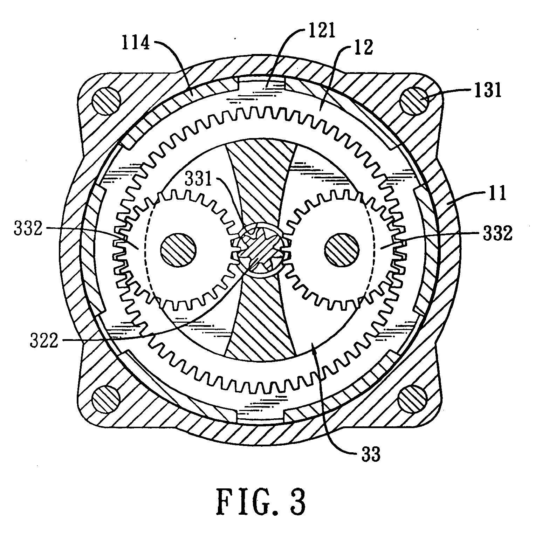

With further referenced to Figs. 2 and 3, the reduction mount 33 is mounted on the holding mount 32 between the gear shaft 322 and the inner gear ring 12 and has a center, a gear hole 331, multiple reducing gears 332 and a position bearing 333. The gear hole 331 is formed through the center of the reduction mount 33 and is mounted around the gear shaft 322 of the holding mount 32. The reducing gears 332 are rotatably connected to the reducing mount 33 around the gear hole 331, engage the gear shaft 322 of the holding mount 32 and the teeth of the inner gear ring 12, and each reducing gear 332 has a spindle rotatably connected to the reducing mount 33. The position bearing 333 is mounted around the gear shaft 322 of the holding mount 32 below the reducing gears 332 to hold the reduction mount 33 in the base 11 and is mounted around the center of the reduction mount 33 to allow the reduction mount 33 rotating freely relative to the holding mount 32.

The output device 40 is mounted in the top cover 13 of the power device 10, is connected to the transmitting device 30 and has a transmitting shaft 41, a transmitting sheath 42 and an output shaft 43.

The transmitting shaft 41 is mounted around the gear shaft 322, is connected to the reducing gears 332 and has a bottom end, a top end and a pivotal post 411. The bottom end of the transmitting shaft 41 is mounted around the gear shaft 322 and is connected to the spindles of the reducing gears 332. The pivotal post 411 is formed on and protrudes from the top end of the transmitting shaft 41.

The transmitting sheath 42 is rotatably mounted around the transmitting shaft 41 between the ends of the transmitting shaft 41 in the top cover 13 and has a bottom, a top, a spring recess 421, a torsional spring 422 and multiple striking blocks 423. The spring recess 421 is formed in the bottom of the transmitting sheath 42 around the transmitting shaft 41. The torsional spring 422 is mounted in the spring recess 421 of the transmitting sheath 42 around the transmitting shaft 41 and has two ends. One of the ends of the torsional spring 422 is connected to the transmitting sheath 42 in the spring recess 421 and the other end of the torsional spring 422 is securely connected to the bottom end of the transmitting shaft 41. The striking blocks 423 are formed on and protrude from the top of the transmitting sheath 42 at intervals around the pivotal post 411 of the transmitting shaft 41.

The output shaft 43 is rotatably mounted on the transmitting shaft 41 above the transmitting sheath 42, extends out of the top cover 13 to connect different kinds of tools and has a bottom end, a top end, an external surface, a pivotal recess 431 and multiple wings 432. The top end of the output shaft 43 extends out of the shaft hole 132 of the top cover 13 to connect with the tools. The pivotal recess 431 is formed in the bottom end of the output shaft 43 and is mounted around the pivotal post 411 of the transmitting shaft 41. The wings 432 are formed on and protrude from the external surface of the output shaft 43 at the bottom end between the striking blocks 423 of the transmitting sheath 42.

With reference to Figs. 2 to 5, when the bidirectional transmission power tool in accordance with the present invention in use, a tool, such as a socket can be mounted on the top end of the output shaft 43 and the drive shaft 112 of the power device 10 can be rotated in a clockwise or a counterclockwise direction to rotate the transmitting jacket 31 at the same direction as the drive shaft 112 of the power device 10 does.

With reference to Fig. 1, the unidirectional bearings 21, 22 have almost same structure and are inverted to overlap with each other. Each clutch post 217, 227 of the unidirectional bearings 21, 22 is pressed against the narrow segment of the active recess 21, 22 by the spring 215, 225 and the mounting tube 216, 226 to make the clutch post 217, 227 abutting the external surface of the transmitting jacket 31. When one of the unidirectional bearings 21, 22 of the bidirectional device 20 is rotated by the power device 10, each clutch post 217, 227 of one of the unidirectional bearings 21, 22 is pressed against the narrow segment of the active recess 21, 22 to abut the external surface of the transmitting jacket 31 and each clutch post 217, 227 of the other unidirectional bearings 21, 22 is separated from the transmitting jacket 31 by a centrifugal force. Thus, each unidirectional bearing 21, 22 can be rotated with the transmitting jacket 31 by the clutch posts 217, 227 abutting the transmitting jacket 31. When each clutch post 217, 227 moves to the wide segment of the active recess 212, 222 to compress the spring 215, 225 between the channel 213, 223 and the mounting tube 216, 226, the friction force between the clutch posts 217, 227and the external surface of the transmitting jacket 31 will be decreased.

With reference to Fig. 5, when the transmitting jacket 31 is rotated in a clockwise direction by the drive shaft 112, the clutch posts 217 of the first unidirectional bearing 21 will move toward the narrow segments of the actives 212 by the biasing force of the springs 215 to abut the external surface of the transmitting jacket 31 to allow the first unidirectional bearing 21 rotating at the clockwise direction with the transmitting jacket 31 by the friction force between the clutch posts 217 and the external surface of the transmitting jacket 31. At the same time, the clutch posts 227 of the second unidirectional bearing 22 will move at the wide segments of the actives 222 by a centrifugal force to separate from the external surface of the transmitting jacket 31. Thus, the bidirectional device 20 can be rotated at the clockwise direction with the drive shaft 112 of the power device 10 by the engagement between the clutch posts 217 in the first unidirectional bearing 21 and the transmitting jacket 31.

According to the above-mentioned operational principle, with reference to Fig.4, when the transmitting jacket 31 is rotated in a counterclockwise direction by the drive shaft 112, the clutch posts 227 of the second unidirectional bearing 22 will move toward the narrow segments of the actives 222 by the biasing force of the springs 225 to abut the external surface of the transmitting jacket 31 to allow the second unidirectional bearing 22 rotating at the counterclockwise direction with the transmitting jacket 31 by the friction force between the clutch posts 227 and the external surface of the transmitting jacket 31. At the same time, the clutch posts 217 of the first unidirectional bearing 21 will move at the wide segments of the actives 212 by a centrifugal force to separate from the external surface of the transmitting jacket 31. Then, the bidirectional device 20 can be rotated at the counterclockwise direction with the drive shaft 112 of the power device 10 by the second unidirectional bearing 22.

Consequently, the bidirectional device 20 can be rotated at the same direction with transmitting jacket 31 by one of the unidirectional bearings 21, 22. When one of the unidirectional bearings 21, 22 is rotated with the transmitting jacket 31, the holding mount 32 will rotate at the same direction with the bidirectional device 20 and the reducing gears 332 will rotate at the opposite direction between the inner gear ring 12 and the gear shaft 322 of the holding mount 32 to rotate the reduction mount 33 relative to the base 11 to allow the transmitting shaft 41 rotating with the reduction mount 33. Thus, the torsional spring 422 will be twisted with the transmitting shaft 41 to make the transmitting sheath 42 rotate with the reduction mount 33 by the torsional of the torsional spring 422. When the transmitting sheath 42 rotates with the reduction mount 33, the striking blocks 423 on the transmitting sheath 42 will impact the wings 432 of the output shaft 43 to rotate the output shaft 43 at the same direction with the transmitting sheath 42. With the above-mentioned transmission of the bidirectional transmission power tool, the power of the power device 10 can be transmitted to the output shaft 43 via the drive shaft 112, the transmitting jacket 31, the bidirectional device 20, the holding mount 32, the reducing mount 33 and the transmitting sheath 42 to rotate the tool mounted at the top end of the output shaft 43.

In the present invention, the clutch posts 217, 227 of the unidirectional bearings 21, 22 can be selectively abut the external surface of the transmitting jacket 31 to rotate the gear shaft 322 with the bidirectional device 20, and the power of the drive shaft 112 can be transmitted to the output shaft 43 via the reducing mount 33 and the transmitting sheath 42. Accordingly, the bidirectional transmission power tool can work by a lowered start-up electric current to provide an energy saving and conservation of electric power effect to the bidirectional transmission power tool. In addition, the elastic-buffering effect of the springs 215, 225 of the unidirectional bearings 21, 22 can reduce the noise while the output shaft 43 is rotated by the drive shaft 112 via the transmitting jacket 31, the bidirectional device 20, the holding mount 32, the reducing mount 33 and the transmitting sheath 42. Furthermore, the operation of the bidirectional transmission power tool is driven by the power device 10, the bidirectional device 20, the transmitting device 30 and the output device 40, and this can keep the electromagnetic wave from occurring.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A bidirectional transmission assembly, having
a power device (10) having
a base (11) having
a bottom;
a top;
a mounting recess (111) formed in the base (11) near the bottom of the base (11) and having a bottom; and
a drive shaft (112) rotatably mounted in and protruding from the bottom of the mounting recess (111);
a bidirectional device (20) mounted in the power device (10) and having
a first unidirectional bearing (21) mounted in the mounting recess (111) of the base (11) and having
a center,
a top face;
a bottom face;
an outer surface;
a jacket hole (211) formed through the center of the first unidirectional bearing (21) at the bottom face of the first unidirectional bearing (21) and mounted around the drive shaft (112) of the base (11); and
multiple active recesses (212) formed through the top face of the first unidirectional bearing (21), communicating with the jacket hole (211) and each active recess (212) having
a clutch post (217) movably mounted in the active recess (212); and
a mounting tube (216) elastically mounted in the active recess (212) and abutting the clutch post (217); and
a second unidirectional bearing (22) mounted in the mounting recess (111) of the base (11) above the first unidirectional bearing (21) and having
a center;
a top face;
a bottom face;
an outer surface;
a jacket hole (221) formed through the center of the second unidirectional bearing (22) at the top face of the second unidirectional bearing (22) and mounted around the drive shaft (112) of the base (11); and
multiple active recesses (222) formed through the bottom face of the second unidirectional bearing (22), communicating with the jacket hole (221) and each active recess (222) having
a clutch post (227) movably mounted in the active recess (222); and
a mounting tube (226 elastically mounted in the active recess (222) and abutting the clutch post (227); and
a transmitting device (30) mounted in the base (11) of the power device (10), connected to the bidirectional device (20) and having
a transmitting jacket (31) securely mounted around the drive shaft (112) of the base (11) in the jacket holes (211, 221) of the unidirectional bearings (21, 22) and having a top end and an external surface abutting the clutch posts (217, 227) of the unidirectional bearings (21, 22); and
a holding mount (32) securely connected to the bidirectional device (20) and mounted on the top end of the transmitting jacket (31).

2. The bidirectional transmission assembly as claimed in claim 1, wherein
the transmitting jacket (31) has a position board (311) formed on the top end of the transmitting jacket (31) and abutting the top face of the second unidirectional bearing (22); and
the holding mount (32) has
a bottom; and
a position recess (321) formed in the bottom of the holding mount (32) and mounted around the position board (311) of the transmitting jacket (31) to provide a stable transmission between the transmitting jacket (31) and the holding mount (32).

3. The bidirectional transmission assembly as claimed in claim 1 or 2, wherein
each active recess (212) of the first unidirectional bearing (21) has
a channel (213) formed through the first unidirectional bearing (21) from the active recess (212) to the outer surface of the first unidirectional bearing (21), communicating with the active recess (212) and having
an outer end formed through the outer surface of the first unidirectional bearing (21); and
an inner end;
a wide segment being defmed in the active recess (212) and communicating with the inner end of the channel (213);
a narrow segment being defined in the active recess (212) away from the channel (213) and communicating with the wide segment of the active recess (212), and the clutch post (217) of the active recess (212) mounted in the narrow segment of the active recess (212)
a closed block (214) mounted in and closing the outer end of the channel (213); and
a spring (215) mounted in the channel (213) and having two ends, one of the ends of the spring (215) abutting the closed block (214) and the other end of the spring (215) extending out of the inner end of the channel (213) and mounted in the mounting tube (216) to push the mounting tube (216) abutting the clutch post (217); and
each active recess (222) of the second unidirectional bearing (22) has
a channel (223) aslant and radially formed through the second unidirectional bearing (22) from the wide segment of the active recess (222) to the outer surface of the second unidirectional bearing (22), communicating with the active recess (222) and having
an outer end formed through the outer surface of the second unidirectional bearing (22); and
an inner end;
a wide segment;
a narrow segment, and the clutch post (227) of the active recess (222) mounted in the narrow segment of the active recess (222);
a closed block (224) mounted in and closing the outer end of the channel (223); and
a spring (225) mounted in the channel (223) and having two ends, one of the ends of the spring (225) abutting the closed block (224) and the other end of the spring (225) extending out of the inner end of the channel (223) and mounted in the mounting tube (226) to push the mounting tube (226) abutting the clutch post (227).

4. The bidirectional transmission assembly as claimed in claim 3, wherein
the base (11) has an opening (113) formed through the top of the base (11) and communicating with the mounting recess (111);
the power device (10) has an inner gear ring (12) mounted in the opening (113) of the base (11) over the mounting recess (111);
the holding mount (32) has
a top;
a center, and
a gear shaft (322) formed on and protruding from the top of the holding mount (32) at the center of the holding mount (32); and
the transmitting device (30) has a reducing mount (33) mounted on the holding mount (32) between the gear shaft (322) and the inner gear ring (12) and having
a center;
a gear hole (331) formed through the center of the reducing mount (33) and mounted around the gear shaft (322) of the holding mount (32);
multiple reducing gears (332) rotatably connected to the reducing mount (33) around the gear hole (331), engaging the gear shaft (322) of the holding mount (32) and each reducing gear (332) having a spindle rotatably connected to the reducing mount (33); and
a position bearing (333) mounted around the gear shaft (322) of the holding mount (32) below the reducing gears (332) to hold the reducing mount (33) in the base (11 and mounted around the center of the reducing mount (33) to allow the reduing mount (33) rotating relative to the holding mount (32).

5. The bidirectional transmission assembly as claimed in claim 4, wherein
the base (11) has multiple mounting plates (114) formed on and protruding from the top of the base (11) at intervals around the opening (113); and
the inner gear ring (12) is connected to the mounting plates (114) of the base (11) and has
an external surface;
an internal surface;
multiple mounting protrusions (121) formed on and protruding from the external surface of the inner gear ring (12) at intervals and connected to the mounting plates (114) of the base (11); and
multiple teeth formed on and protruding from the internal surface of the inner gear ring (12) and engaging the reducing gears (332) of the reducing mount (33).

6. The bidirectional transmission assembly as claimed in claim 5, wherein
the first unidirectional bearing (21) has multiple threaded holes (218) formed through the top face and the bottom face of the first unidirectional bearing (21) between the active recesses (212);
the second unidirectional bearing (22) has multiple through holes (228) formed through the top face and the bottom face of the second unidirectional bearing (22) between the active recesses (222) and aligning respectively with the threaded holes (218) of the first unidirectional bearing (21);
the bidirectional device (20) has a spacer (23) mounted in the mounting recess (111) of the base (11) between the unidirectional bearings (21, 22) and having
a central hole (231) formed through the spacer (23), mounted around the drive shaft (112) of the base (11) and aligning respectively with the jacket holes (211, 221) of the unidirectional bearings (21, 22); and
multiple spacer holes (232) formed through the spacer (23) around the central hole (231) and aligning with the through holes (228) of the second unidirectional bearing (22) and the threaded holes (218) of the first unidirectional bearing (21); and
the holding mount (32) has multiple bolts (323) respectively mounted through the holding mount (32), the through holes (228) of the second unidirectional bearing (22) and the spacer holes (232) of the spacer (23) and respectively screwed into the threaded holes (218) of the first unidirectional bearing (21) to combine the holding mount (32) securely with the unidirectional bearing (21, 22) and the spacer (23).

7. A bidirectional transmission power tool comprising a bidirectional transmission assembly according to claim 1, **characterized in that** the bidirectional transmission power tool further has
a top cover (13) securely mounted on the base (11) and having
a bottom mounted on the top of the base (11);
a top; and
a shaft hole (132) formed through the top of the top cover (13); and
an output device (40) mounted in the top cover (13) of the power device (10), connected to the transmitting device (30) and having
a transmitting shaft (41) connected to the transmitting device (30);
a transmitting sheath (42) rotatably mounted around the transmitting shaft (41) in the top cover (13) and having
a bottom;
a top; and
multiple striking blocks (423) formed on and protruding from the top of the transmitting sheath (42) at intervals around the transmitting shaft (41); and
an output shaft (43) rotatably mounted on the transmitting shaft (41) above the transmitting sheath (42), extending out of the top cover (13) to connect different kinds of tools and having
a bottom end;
a top end extending out of the top cover (13);
an external surface; and
multiple wings (432) formed on and protruding from the external surface of the output shaft (43) at the bottom end between the striking blocks (423) of the transmitting sheath (42).

8. The bidirectional transmission power tool as claimed in claim 7, wherein
the transmitting jacket (31) has a position board (311) formed on the top end of the transmitting jacket (31) and abutting the top face of the second unidirectional bearing (22); and
the holding mount (32) has
a bottom; and
a position recess (321) formed in the bottom of the holding mount (32) and mounted around the position board (311) of the transmitting jacket (31) to provide a stable transmission between the transmitting jacket (31) and the holding mount (32).

9. The bidirectional transmission power tool as claimed in claim 7 or 8, wherein
each active recess (212) of the first unidirectional bearing (21) has
a channel (213) formed through the first unidirectional bearing (21) from the active recess (212) to the outer surface of the first unidirectional bearing (21), communicating with the active recess (212) and having
an outer end formed through the outer surface of the first unidirectional bearing (21); and
an inner end;
a wide segment being defined in the active recess (212) and communicating with the inner end of the channel (213);
a narrow segment being defined in the active recess (212) away from the channel (213) and communicating with the wide segment of the active recess (212), and the clutch post (217) of the active recess (212) mounted in the narrow segment of the active recess (212);
a closed block (214) mounted in and closing the outer end of the channel (213); and
a spring (215) mounted in the channel (213) and having two ends, one of the ends of the spring (215) abutting the closed block (214) and the other end of the spring (215) extending out of the inner end of the channel (213) and mounted in the mounting tube (216) to push the mounting tube (21) abutting the clutch post (217); and
each active recess (222) of the second unidirectional bearing (22) has
a channel (223) aslant and radially formed through the second unidirectional bearing (22) from the wide segment of the active recess (222) to the outer surface of the second unidirectional bearing (22), communicating with the active recess (222) and having
an outer end formed through the outer surface of the second unidirectional bearing (22); and
an inner end formed through the wide segment of the second unidirectional bearing (22);
a wide segment;
a narrow segment, and the clutch post (227) of the active recess (222) mounted in the narrow segment of the active recess (222);
a closed block (224) mounted in and closing the outer end of the channel (223); and
a spring (225) mounted in the channel (223) and having two ends, one of the ends of the spring (225) abutting the closed block (224) and the other end of the spring (225) extending out of the inner end of the channel (223) and mounted in the mounting tube (226) to push the mounting tube (226) abutting the clutch post (227).

10. The bidirectional transmission power tool as claimed in claim 9, wherein
the base (11) has an opening (113) formed through the top of the base (11) and communicating with the mounting recess (111);
the power device (10) has an inner gear ring (12) mounted in the opening (113) of the base (11) over the mounting recess (111);
the holding mount (32) has
a top;
a center; and
a gear shaft (322) formed on and protruding from the top of the holding mount (32) at the center of the holding mount (32);
the transmitting device (30) has a reducing mount (33) mounted on the holding mount (32) between the gear shaft (322) and the inner gear ring (12) and having
a center;
a gear hole (331) formed through the center of the-reducing mount (33) and mounted around the gear shaft (322) of the holding mount (32);
multiple reducing gears (332) rotatably connected to the reducing mount (33) around the gear hole (331), engaging the gear shaft (322) of the holding mount (32) and each reducing gear (332) having a spindle rotatably connected to the reducing mount (33); and
a position bearing (333) mounted around the gear shaft (322) of the holding mount (32) below the reducing gears (332) to hold the reducing mount (33) in the base (11) and mounted around the center of the reducing mount (33) to allow the reducing mount (33) rotating relative to the holding mount (32); and
the transmitting shaft (41) has a bottom end mounted around the gear shaft (322) and connected to the spindles of the reducing gears (332).

11. The bidirectional transmission power tool as claimed in claim 10, wherein
the base (11) has multiple mounting plates (114) formed on and protruding from the top of the base (11) at intervals around the opening (113); and
the inner gear ring (12) is connected to the mounting plates (114) of the base (11) and has
an external surface;
an internal surface;
multiple mounting protrusions (121) formed on and protruding from the external surface of the inner gear ring (12) at intervals and connected to the mounting plates (114) of the base (11); and
multiple teeth formed on and protruding from the internal surface of the inner gear ring (12) and engaging the reducing gears (332) of the reducing mount (33).

12. The bidirectional transmission power tool as claimed in claim 11, wherein
the transmitting shaft (41) has
a top end; and
a pivotal post (411) formed on and protruding from the top end of the transmitting shaft (41);
the output shaft (43) has a pivotal recess (431) formed in the bottom end of the output shaft (43) and mounted around the pivotal post (411) of the transmitting shaft (41).

13. The bidirectional transmission power tool as claimed in claim 12, wherein
the first unidirectional bearing (21) has multiple threaded holes (218) formed through the top face and the bottom face of the first unidirectional bearing (21) between the active recesses (212);
the second unidirectional bearing (22) has multiple through holes (228) formed through the top face and the bottom face of the second unidirectional bearing (22) between the active recesses (222) and aligning respectively with the threaded holes (218) of the first unidirectional bearing (21);
the bidirectional device (20) has a spacer (23) mounted in the mounting recess (111) of the base (11) between the unidirectional bearings (21, 22) and having
a central hole (231) formed through the spacer (23), mounted around the drive shaft (112) of the base (11) and aligning respectively with the jacket holes (211, 221) of the unidirectional bearings (21, 22); and
multiple spacer holes (232) formed through the spacer (23) around the central hole (231) and aligning with the through holes (228) of the second unidirectional bearing (22) and the threaded holes (218) of the first unidirectional bearing (21); and
the holding mount (32) has multiple bolts (323) respectively mounted through the holding mount (32), the through holes (228) of the second unidirectional bearing (22) and the spacer holes (232) of the spacer (23) and respectively screwed into the threaded holes (218) of the first unidirectional bearing (21) to combine the holding mount (32) securely with the unidirectional bearing (21, 22) and the spacer (23).

14. The bidirectional transmission power tool as claimed in claim 13, wherein the transmitting sheath (42) has
a spring recess (421) formed in the bottom of the transmitting sheath (42) around the transmitting shaft (41); and
a torsional spring (422) mounted in the spring recess (421) of the transmitting sheath (42) around the transmitting shaft (41) and having two ends, one of the ends of the torsional spring (422) connected to the transmitting sheath (42) in the spring recess (421) and the other end of the torsional spring (422) securely connected to the bottom end of the transmitting shaft (41).

15. The bidirectional transmission power tool as claimed in claim 14, wherein the top cover (13) has multiple fasteners (131) mounted in the bottom of the top cover (13) and connected securely to the top of the base (11).

## Patentansprüche

1. Bidirektionale Übertragungsbaugruppe, die Folgendes aufweist
eine Elektrovorrichtung (10), die Folgendes aufweist
eine Basis (11), die Folgendes aufweist
ein Unterteil;
ein Oberteil;
eine Lagerungsaussparung (111), die in der Basis (11) in der Nähe des Unterteils der Basis (11) gebildet ist und die ein Unterteil aufweist; und
eine Antriebswelle (112), die drehbar im Unterteil der Lagerungsaussparung (111) gelagert ist und von ihm hervorsteht;
eine bidirektionale Vorrichtung (20), die in der Elektrovorrichtung (10) gelagert ist und Folgendes aufweist
ein erstes unidirektionales Lager (21), das in der Lagerungsaussparung (111) der Basis (11) gelagert ist und Folgendes aufweist
eine Mitte;
eine Oberseite;
eine Unterseite;
eine Außenfläche;
eine Mantelbohrung (211), die durch die Mitte des ersten unidirektionalen Lagers (21) und die Unterseite des ersten unidirektionalen Lagers (21) gebildet ist und um die Antriebswelle (112) der Basis (11) gelagert ist; und
mehrere aktive Aussparungen (212), die durch die Oberseite des ersten unidirektionalen Lagers (21) gebildet sind und mit der Mantelbohrung (211) und jeder aktiven Aussparung (212) in Verbindung stehen, die Folgendes aufweisen
eine Kupplungsstange (217), die beweglich in der aktiven Aussparung (212) gelagert ist; und
ein Lagerungsrohr (216), das elastisch in der aktiven Aussparung (212) gelagert ist; und an der Kupplungsstange (217) anliegt; und
ein zweites unidirektionales Lager (22) das in der Lagerungsaussparung (111) der Basis (11) über dem ersten unidirektionalen Lager (21) gelagert ist und Folgendes aufweist
eine Mitte;
eine Oberseite;
eine Unterseite;
eine Außenfläche;
eine Mantelbohrung (221), die durch die Mitte des zweiten unidirektionalen Lagers (22) an der Oberseite des zweiten unidirektionalen Lagers (22) gebildet ist und um die Antriebswelle (112) der Basis (11) gelagert ist; und
mehrere aktive Aussparungen (222), die durch die Unterseite des zweiten unidirektionalen Lagers (22) gebildet sind und mit der Mantelbohrung (221) und jeder aktiven Aussparung (222) in Verbindung stehen, und Folgendes aufweisen
eine Kupplungsstange (227), die beweglich in der aktiven Aussparung (222) gelagert ist; und
ein Lagerungsrohr (226), das elastisch in der aktiven Aussparung (222) gelagert ist und an der Kupplungsstange anliegt (227); und
eine Übertragungsvorrichtung (30), die in der Basis (11) der Elektrovorrichtung (10) gelagert und mit der bidirektionalen Vorrichtung (20) verbunden ist und Folgendes aufweist
einen Übertragungsmantel (31), der fest um die Antriebswelle (112) der Basis (11) in den Mantelbohrungen (211, 221) der unidirektionalen Lager (21, 22) gelagert ist und der ein oberes Ende und eine Außenfläche aufweist, die an den Kupplungsstangen (217, 227) der unidirektionalen Lager (21, 22) anliegt; und
eine Haltelagerung (32), die sicher mit der bidirektionalen Vorrichtung (20) verbunden ist und auf dem oberen Ende des Übertragungsmantels (31) gelagert ist.

2. Bidirektionale Übertragungsbaugruppe nach Anspruch 1, wobei
der Übertragungsmantel (31) eine Positionsplatte (311) aufweist, die an dem oberen Ende des Übertragungsmantels (31) gebildet ist und die an der Oberseite des zweiten unidirektionalen Lagers (22) anliegt; und
die Haltelagerung (32) Folgendes aufweist
ein Unterteil; und
eine Positionsaussparung (321), die in dem Unterteil der Haltelagerung (32) gebildet ist und die um die Positionsplatte (311) des Übertragungsmantels (31) gelagert ist, um eine stabile Übertragung zwischen dem Übertragungsmantel (31) und der Haltelagerung (32) bereitzustellen.

3. Bidirektionale Übertragungsbaugruppe nach Anspruch 1 oder 2, wobei
jede aktive Aussparung (212) des ersten unidirektionalen Lagers (21) Folgendes aufweist
einen Kanal (213), der durch das erste unidirektionale Lager (21) von der aktiven Aussparung (212) zu der Außenfläche des ersten unidirektionalen Lagers (21) gebildet ist und mit der aktiven Aussparung (212) in Verbindung steht und Folgendes aufweist
ein äußeres Ende, das durch die Außenfläche des ersten unidirektionalen Lagers (21) gebildet ist; und
ein inneres Ende;
ein breites Segment, das in der aktiven Aussparung (212) bestimmt ist und mit dem inneren Ende des Kanals (213) in Verbindung steht;
ein schmales Segment, das in der aktiven Aussparung (212) von dem Kanal (213) weg bestimmt ist und mit dem breiten Segment der aktiven Aussparung (212) in Verbindung steht, und die Kupplungsstange (217) der aktiven Aussparung (212), die in dem schmalen Segment der aktiven Aussparung (212) gelagert ist;
einen geschlossenen Block (214), der in dem äußeren Ende des Kanals (213) gelagert ist und es verschließt; und
eine Feder (215), die in dem Kanal (213) gelagert ist und zwei Enden aufweist, wobei eines der Enden der Feder (215) an dem geschlossenen Block (214) anliegt und das andere Ende der Feder (215) sich aus dem inneren Ende des Kanals (213) heraus erstreckt und in dem Lagerungsrohr (216) gelagert ist, um gegen das Lagerungsrohr (216) zu drücken, das an der Kupplungsstange (217) anliegt; und
jede aktive Aussparung (222) des zweiten unidirektionalen Lagers (22) Folgendes aufweist
einen Kanal (223), der schräg und radial durch das zweite unidirektionale Lager (22) von dem breiten Segment der aktiven Aussparung (222) bis zu der Außenfläche des zweiten unidirektionalen Lagers (22) gebildet ist, der mit der aktiven Aussparung (222) in Verbindung steht und Folgendes aufweist
ein äußeres Ende, das durch die Außenfläche des zweiten unidirektionalen Lagers (22) gebildet ist; und
ein inneres Ende;
ein breites Segment;
ein schmales Segment, und wobei die Kupplungsstange (227) der aktiven Aussparung (222) in dem schmalen Segment der aktiven Aussparung (222) gelagert ist;
einen geschlossenen Block (224), der in dem äußeren Ende des Kanals (223) gelagert ist und es verschließt; und
eine Feder (225), die in dem Kanal (223) gelagert ist und zwei Enden aufweist, wobei eines der Enden der Feder (225) an dem geschlossenen Block (214) anliegt und das andere Ende der Feder (225) sich aus dem inneren Ende des Kanals (223) heraus erstreckt und in dem Lagerungsrohr (226) gelagert ist, um gegen das Lagerungsrohr (226) zu drücken, das an der Kupplungsstange (227) anliegt.

4. Bidirektionale Übertragungsbaugruppe nach Anspruch 3, wobei
die Basis (11) eine Öffnung (113) aufweist, die durch das Oberteil der Basis (11) hindurch gebildet ist und die mit der Lagerungsaussparung (111) in Verbindung steht;
die Elektrovorrichtung (10) ein Hohlrad (12) aufweist, das in der Öffnung (113) der Basis (11) über der Lagerungsaussparung (111) gebildet ist;
die Haltelagerung (32) Folgendes aufweist
ein Oberteil;
eine Mitte; und
eine Getriebewelle (322), die auf dem Oberteil der Haltelagerung (32) in der Mitte der Haltelagerung (32) gebildet ist und von ihm hervorsteht; und
die Übertragungsvorrichtung (30) eine Reduktionslagerung (33) aufweist, die an der Haltelagerung (32) zwischen der Getriebewelle (322) und dem Hohlrad (12) gelagert ist und Folgendes aufweist
eine Mitte;
eine Getriebebohrung (331), die durch die Mitte der Reduktionslagerung (33) gebildet ist und um die Getriebewelle (322) der Haltelagerung (32) gelagert ist;
mehrere Reduktionsgetriebe (332), die drehbar mit der Reduktionslagerung (33) um die Getriebebohrung (331) verbunden sind und mit der Getriebewelle (322) der Haltelagerung (32) in Eingriff stehen, und wobei jedes Reduktionsgetriebe (332) eine Achse aufweist, die drehbar mit der Reduktionslagerung (33) verbunden ist; und
ein Positionslager (333), das um die Getriebewelle (322) der Haltelagerung (32) unter den Reduktionsgetrieben (332) gelagert ist, um die Reduktionslagerung (33) in der Basis (11) zu halten, und das um die Mitte der Reduktionslagerung (33) gelagert ist, um der Reduktionslagerung (33) das Drehen in Bezug auf die Haltelagerung (32) zu ermöglichen.

5. Bidirektionale Übertragungsbaugruppe nach Anspruch 4, wobei
die Basis (11) mehrere Lagerungsplatten (114) aufweist, die auf dem Oberteil der Basis (11) in Abständen um die Öffnung (113) herum gebildet sind und von ihm hervorstehen; und
das Hohlrad (12) mit den Lagerungsplatten (114) der Basis (11) verbunden ist und Folgendes aufweist
eine Außenfläche;
eine Innenfläche;
mehrere Lagerungsvorsprünge (121), die auf der Außenfläche des Hohlrads (12) in Abständen gebildet sind und von ihr hervorstehen und mit den Lagerungsplatten (114) der Basis (11) verbunden sind; und
mehrere Zähne, die auf der Innenfläche des Hohlrads (12) gebildet sind und von ihr hervorstehen und in Eingriff mit den Reduktionsgetrieben (332) der Reduktionslagerung (33) stehen.

6. Bidirektionale Übertragungsbaugruppe nach Anspruch 5, wobei
das erste unidirektionale Lager (21) mehrere Gewindebohrungen (218) aufweist, die durch die Oberseite und die Unterseite des ersten unidirektionalen Lagers (21) zwischen den aktiven Aussparungen (212) gebildet sind;
das zweite unidirektionale Lager (22) mehrere Durchgangsbohrungen (228) aufweist, die durch die Oberseite und die Unterseite des zweiten unidirektionalen Lagers (22) zwischen den aktiven Aussparungen (222) gebildet sind und die jeweils mit den Gewindebohrungen (218) des ersten unidirektionalen Lagers (21) fluchten;
die bidirektionale Vorrichtung (20) einen Abstandhalter (23) aufweist, der in der Lagerungsaussparung (111) der Basis (11) zwischen den unidirektionalen Lagern (21, 22) gelagert ist und Folgendes aufweist
eine mittige Bohrung (231), die durch den Abstandhalter (23) gebildet und um die Antriebswelle (112) der Basis (11) gelagert ist und jeweils mit den Mantelbohrungen (211, 221) der unidirektionalen Lager (21, 22) fluchtet; und
mehrere Abstandhalter-Bohrungen (232), die durch den Abstandhalter (23) um die mittige Bohrung (231) gebildet sind und mit den Durchgangsbohrungen (228) des zweiten unidirektionalen Lagers (22) und den Gewindebohrungen (218) des ersten unidirektionalen Lagers (21) fluchten; und
die Haltelagerung (32) mehrere Schrauben (323) aufweist, die jeweils durch die Haltelagerung (32) und die Durchgangsbohrungen (228) des zweiten unidirektionalen Lagers (22) und die Abstandhalter-Bohrungen (232) des Abstandhalters (23) gelagert sind und jeweils in die Gewindebohrungen (218) des ersten unidirektionalen Lagers (21) geschraubt sind, um die Haltelagerung (32) sicher mit dem unidirektionalen Lager (21, 22) und dem Abstandhalter (23) zu verbinden.

7. Elektrowerkzeug mit bidirektionaler Übertragung, umfassend eine bidirektionale Übertragungsbaugruppe nach Anspruch 1, **dadurch gekennzeichnet, dass** das Elektrowerkzeug mit bidirektionaler Übertragung überdies Folgendes aufweist
eine obere Abdeckung (13), die sicher an der Basis (11) gelagert ist und Folgendes aufweist
ein Unterteil, das an dem Oberteil der Basis (11) gelagert ist;
ein Oberteil; und
eine Wellenbohrung (132), die durch das Oberteil der oberen Abdeckung (13) gebildet ist;
und
eine Abtriebsvorrichtung (40), die in der oberen Abdeckung (13) der Elektrovorrichtung (10) gelagert und mit der Übertragungsvorrichtung (30) verbunden ist und Folgendes aufweist
eine Übertragungswelle (41), die mit der Übertragungsvorrichtung (30) verbunden ist;
eine Übertragungshülle (42), die drehbar um die Übertragungswelle (41) in der oberen Abdeckung (13) gelagert ist und Folgendes aufweist
ein Unterteil;
ein Oberteil; und
mehrere Schlagblöcke (423), die in Abständen um die Übertragungswelle (41) auf dem Oberteil der Übertragungshülle (42) gebildet sind und von ihm hervorstehen; und
eine Abtriebswelle (43), die drehbar an der Übertragungswelle (41) über der Übertragungshülle (42) gelagert ist, sich aus der oberen Abdeckung (13) heraus erstreckt, um verschiedene Arten von Werkzeugen anzuschließen und Folgendes aufweist
ein unteres Ende;
ein oberes Ende, das sich aus der oberen Abdeckung (13) heraus erstreckt;
eine Außenfläche; und
mehrere Flügel (432), die auf der Außenfläche der Abtriebswelle (43) am unteren Ende zwischen den Schlagblöcken (423) der Übertragungshülle (42) gebildet sind und von ihr hervorstehen.

8. Elektrowerkzeug mit bidirektionaler Übertragung nach Anspruch 7, wobei
der Übertragungsmantel (31) eine Positionsplatte (311) aufweist, die an dem oberen Ende des Übertragungsmantels (31) gebildet ist und an der Oberseite des zweiten unidirektionalen Lagers (22) anliegt; und
die Haltelagerung (32) Folgendes aufweist
ein Unterteil; und
eine Positionsaussparung (321), die in dem Unterteil der Haltelagerung (32) gebildet ist und um die Positionsplatte (311) des Übertragungsmantels (31) gelagert ist, um eine stabile Übertragung zwischen dem Übertragungsmantel (31) und der Haltelagerung (32) bereitzustellen.

9. Elektrowerkzeug mit bidirektionaler Übertragung nach Anspruch 7 oder 8, wobei
jede aktive Aussparung (212) des ersten unidirektionalen Lagers (21) Folgendes aufweist
einen Kanal (213), der durch das erste unidirektionale Lager (21) von der aktiven Aussparung (212) zu der Außenfläche des ersten unidirektionalen Lagers (21) gebildet ist, mit der aktiven Aussparung (212) in Verbindung steht und Folgendes aufweist
ein äußeres Ende, das durch die Außenfläche des ersten unidirektionalen Lagers (21) gebildet ist; und
ein inneres Ende;
ein breites Segment, dass in der aktiven Aussparung (212) bestimmt ist und mit dem inneren Ende des Kanals (213) in Verbindung steht;
ein schmales Segment, das in der aktiven Aussparung (212) von dem Kanal (213) weg bestimmt ist und mit dem breiten Segment der aktiven Aussparung (212) in Verbindung steht, und wobei die Kupplungsstange (217) der aktiven Aussparung (212) in dem schmalen Segment der aktiven Aussparung (212) gelagert ist;
einen geschlossenen Block (214), der in dem äußeren Ende des Kanals (213) gelagert ist und es verschließt; und
eine Feder (215) die in dem Kanal (213) gelagert ist und zwei Enden aufweist, wobei eins der Enden der Feder (215) an dem geschlossenen Block (214) anliegt und das andere Ende der Feder (215) sich aus dem inneren Ende des Kanals (213) heraus erstreckt und in dem Lagerungsrohr (216) gelagert ist, um gegen das Lagerungsrohr (216) zu drücken, das an der Kupplungsstange (217) anliegt; und
jede aktive Aussparung (222) des zweiten unidirektionalen Lagers (22) Folgendes aufweist
einen Kanal (223), der schräg und radial durch das zweite unidirektionale Lager (22) von dem breiten Segment der aktiven Aussparung (222) bis zu der Außenfläche des zweiten unidirektionalen Lagers (22) gebildet ist, mit der aktiven Aussparung (222) in Verbindung steht und Folgendes aufweist
ein äußeres Ende, das durch die Außenfläche des zweiten unidirektionalen Lagers (22) gebildet ist; und
ein inneres Ende, das durch das breite Segment des zweiten unidirektionalen Lagers (22) gebildet ist;
ein breites Segment;
ein schmales Segment, und wobei die Kupplungsstange (227) der aktiven Aussparung (222) in dem schmalen Segment der aktiven Aussparung (222) gelagert ist;
einen geschlossenen Block (224), der in dem äußeren Ende des Kanals (223) gelagert ist und es verschließt; und
eine Feder (225) die in dem Kanal (223) gelagert ist und zwei Enden aufweist, wobei eines der Enden der Feder (225) an dem geschlossenen Block (224) anliegt und das andere Ende der Feder (225) sich aus dem inneren Ende des Kanals (223) heraus erstreckt und in dem Lagerungsrohr (226) gelagert ist, um gegen das Lagerungsrohr (226) zu drücken, das an der Kupplungsstange (227) anliegt.

10. Elektrowerkzeug mit bidirektionaler Übertragung nach Anspruch 9, wobei
die Basis (11) eine Öffnung (113) aufweist, die durch das Oberteil der Basis (11) gebildet ist und mit der Lagerungsaussparung (111) in Verbindung steht;
die Elektrovorrichtung (10) ein Hohlrad (12) aufweist, das in der Öffnung (113) der Basis (11) über der Lagerungsaussparung (111) gelagert ist;
die Haltelagerung (32) Folgendes aufweist
ein Oberteil;
eine Mitte; und
eine Getriebewelle (322), die auf dem Oberteil der Haltelagerung (32) in der Mitte der Haltelagerung (32) gebildet ist und von ihr hervorsteht;
die Übertragungsvorrichtung (30) eine Reduktionslagerung (33) aufweist, die an der Haltelagerung (32) zwischen der Getriebewelle (322) und dem Hohlrad (12) gelagert ist und Folgendes aufweist
eine Mitte;
eine Getriebebohrung (331), die durch die Mitte der Reduktionslagerung (33) gebildet ist und um die Getriebewelle (332) der Haltelagerung (32) gelagert ist;
mehrere Reduktionsgetriebe (332), die drehbar mit der Reduktionslagerung (33) um die Getriebebohrung (331) verbunden sind mit der Getriebewelle (322) der Haltelagerung (32) in Eingriff stehen, und wobei jedes Reduktionsgetriebe (332) eine Achse aufweist, die drehbar mit der Reduktionslagerung (33) verbunden ist; und
ein Positionslager (333), das um die Getriebewelle (322) der Haltelagerung (32) unter den Reduktionsgetrieben (332) gelagert ist, um die Reduktionslagerung (33) in der Basis (11) zu halten und das um die Mitte der Reduktionslagerung (33) gelagert ist, um der Reduktionslagerung (33) das Drehen in Bezug auf die Haltelagerung (32) zu ermöglichen; und
die Übertragungswelle (41) ein unteres Ende aufweist, das um die Getriebewelle (322) gelagert ist und mit den Achsen der Reduktionsgetriebe (332) verbunden ist.

11. Elektrowerkzeug mit bidirektionaler Übertragung nach Anspruch 10, wobei
die Basis (11) mehrere Lagerungsplatten (114) aufweist, die in Abständen auf dem Oberteil der Basis (11) um die Öffnung (113) gebildet sind und von ihm hervorstehen; und
das Hohlrad (12) mit den Lagerungsplatten (114) der Basis (11) verbunden ist und Folgendes aufweist
eine Außenfläche;
eine Innenfläche;
mehrere Lagerungsaussparungen (121), die in Abständen auf der Außenfläche des Hohlrads (12) gebildet sind und von ihr hervorstehen und mit den Lagerungsplatten (114) der Basis (11) verbunden sind; und
mehrere Zähne, die auf der Innenfläche des Hohlrads (12) gebildet sind und von ihr hervorstehen und in Eingriff mit den Reduktionsgetrieben (332) der Reduktionslagerung (33) stehen.

12. Elektrowerkzeug mit bidirektionaler Übertragung nach Anspruch 11, wobei
die Übertragungswelle (41) Folgendes aufweist
ein oberes Ende; und
eine Drehstange (411), die auf dem oberen Ende der Übertragungswelle (41) gebildet ist und von ihm hervorsteht;
die Abtriebswelle (43) eine Drehaussparung (431) aufweist, die in dem unteren Ende der Abtriebswelle (43) gebildet ist und um die Drehstange (411) der Übertragungswelle (41) gelagert ist.

13. Elektrowerkzeug mit bidirektionaler Übertragung nach Anspruch 12, wobei
das erste unidirektionale Lager (21) mehrere Gewindebohrungen (218) aufweist, die durch die Oberseite und die Unterseite des ersten unidirektionalen Lagers (21) zwischen den aktiven Aussparungen (212) gebildet sind;
das zweite unidirektionale Lager (22) mehrere Durchgangsbohrungen (228) aufweist, die durch die Oberseite und die Unterseite des zweiten unidirektionalen Lagers (22) zwischen den aktiven Aussparungen (222) gebildet sind und jeweils mit den Gewindebohrungen (218) des ersten unidirektionalen Lagers (21) fluchten;
die bidirektionale Vorrichtung (20) einen Abstandhalter (23) aufweist, der in der Lagerungsaussparung (111) der Basis (11) zwischen den unidirektionalen Lagern (21, 22) gelagert ist und Folgendes aufweist
eine mittige Bohrung (231), die durch den Abstandhalter (23) gebildet ist, um die Antriebswelle (112) der Basis (11) gelagert ist und jeweils mit den Mantelbohrungen (211, 221) der unidirektionalen Lager (21,22) fluchtet; und
mehrere Abstandhalter-Bohrungen (232), die durch den Abstandhalter (23) um die mittige Bohrung (231) gebildet sind und mit den Durchgangsbohrungen (228) des zweiten unidirektionalen Lagers (22) und den Gewindebohrungen (218) des ersten unidirektionalen Lagers (21) fluchten; und
die Haltelagerung (32) mehrere Schrauben (323) aufweist, die jeweils durch die Haltelagerung (32), die Durchgangsbohrungen (228) des zweiten unidirektionalen Lagers (22) und die Abstandhalter-Bohrungen (232) des Abstandhalters (23) gelagert sind und jeweils in die Gewindebohrungen (218) des ersten unidirektionalen Lagers (21) geschraubt sind, um die Haltelagerung (32) sicher mit dem unidirektionalen Lager (21, 22) und dem Abstandhalter (23) zu verbinden.

14. Elektrowerkzeug mit bidirektionaler Übertragung nach Anspruch 13, wobei die Übertragungshülle (42) Folgendes aufweist
eine Federaussparung (421), die im Unterteil der Übertragungshülle (42) um die Übertragungswelle (41) gebildet ist; und
eine Torsionsfeder (422), die in der Federaussparung (421) der Übertragungshülle (42) um die Übertragungswelle (41) gelagert ist und zwei Enden aufweist, wobei eines der Enden der Torsionsfeder (422) mit der Übertragungshülle (42) in der Federaussparung (421) verbunden ist und das andere Ende der Torsionsfeder (422) sicher mit dem unteren Ende der Übertragungswelle (41) verbunden ist.

15. Elektrowerkzeug mit bidirektionaler Übertragung nach Anspruch 14, wobei die obere Abdeckung (13) mehrere Befestigungsmittel (131) aufweist, die im Unterteil der oberen Abdeckung (13) gelagert sind und fest mit dem Oberteil der Basis (11) verbunden sind.

## Revendications

1. Ensemble de transmission bidirectionnelle, ayant
un dispositif électrique (10) ayant
une base (11) ayant
un fond ;
un sommet ;
un creux de montage (111) formé dans la base (11) près du fond de la base (11) et ayant un fond ; et
un arbre d'entraînement (112) monté en rotation dans le fond du creux de montage (111), et dépassant de ce fond ;
un dispositif bidirectionnel (20) monté dans le dispositif électrique (10) et ayant un premier palier unidirectionnel (21) monté dans le creux de montage (111) de la base (11) et ayant
un centre ;
une face supérieure ;
une face inférieure ;
une surface extérieure ;
un trou de chemise (211) formé à travers le centre du premier palier unidirectionnel (21) au niveau de la face inférieure du premier palier unidirectionnel (21) et monté autour de l'arbre d'entraînement (112) de la base (11) ; et
de multiples creux actifs (212) formés à travers la face supérieure du premier palier unidirectionnel (21), communiquant avec le trou de chemise (211), et chaque creux actif (212) ayant
une tige d'embrayage (217) montée de façon mobile dans le creux actif (212) ; et
un tube de montage (216) monté élastiquement dans le creux actif (212) et butant contre la tige d'embrayage (217) ; et
un deuxième palier unidirectionnel (22) monté dans le creux de montage (111) de la base (11) au-dessus du premier palier unidirectionnel (21) et ayant un centre ;
une face supérieure ;
une face inférieure ;
une surface extérieure ;
un trou de chemise (221) formé à travers le centre du deuxième palier unidirectionnel (22) au niveau de la face supérieure du deuxième palier unidirectionnel (22) et monté autour de l'arbre d'entraînement (112) de la base (11) ; et
de multiples creux actifs (222) formés à travers la face inférieure du deuxième palier unidirectionnel (22), communiquant avec le trou de chemise (221), et chaque creux actif (222) ayant
une tige d'embrayage (227) montée de façon mobile dans le creux actif (222) ; et
un tube de montage (226) monté élastiquement dans le creux actif (222) et butant contre la tige d'embrayage (227) ; et
un dispositif de transmission (30) monté dans la base (11) du dispositif électrique (10), raccordé au dispositif bidirectionnel (20) et ayant
une chemise de transmission (31) montée fermement autour de l'arbre d'entraînement (112) de la base (11) dans les trous de chemise (211, 221) des paliers unidirectionnels (21, 22) et ayant une extrémité supérieure et une surface externe butant contre les tiges d'embrayage (217, 227) des paliers unidirectionnels (21, 22) ; et
une monture de retenue (32) raccordée fermement au dispositif bidirectionnel (20) et montée sur l'extrémité supérieure de la chemise de transmission (31).

2. Ensemble de transmission bidirectionnelle selon la revendication 1, dans lequel
la chemise de transmission (31) a une plaque de position (311) formée sur l'extrémité supérieure de la chemise de transmission (31) et butant contre la face supérieure du deuxième palier unidirectionnel (22) ; et
la monture de retenue (32) a un fond ; et
un creux de position (321) formé dans le fond de la monture de retenue (32) et monté autour de la plaque de position (311) de la chemise de transmission (31) pour fournir une transmission stable entre la chemise de transmission (31) et la monture de retenue (32).

3. Ensemble de transmission bidirectionnelle selon la revendication 1 ou 2, dans lequel
chaque creux actif (212) du premier palier unidirectionnel (21) a une canalisation (213) formée à travers le premier palier unidirectionnel (21) à partir du creux actif (212) vers la surface extérieure du premier palier unidirectionnel (21), communiquant avec le creux actif (212) et ayant
une extrémité extérieure formée à travers la surface extérieure du premier palier unidirectionnel (21) ; et
une extrémité intérieure ;
un segment large étant défini dans le creux actif (212) et communiquant avec l'extrémité intérieure de la canalisation (213) ;
un segment étroit étant défini dans le creux actif (212) à distance de la canalisation (213) et communiquant avec le segment large du creux actif (212), et la tige d'embrayage (217) du creux actif (212) montée dans le segment étroit du creux actif (212)
un bloc fermé (214) monté dans l'extrémité extérieure de la canalisation (213) et fermant cette extrémité ; et
un ressort (215) monté dans la canalisation (213) et ayant deux extrémités, une des extrémités du ressort (215) butant contre le bloc fermé (214), et l'autre extrémité du ressort (215) sortant de l'extrémité intérieure de la canalisation (213) et montée dans le tube de montage (216) pour pousser le tube de montage (216) qui vient buter contre la tige d'embrayage (217) ; et
chaque creux actif (222) du deuxième palier unidirectionnel (22) a une canalisation (223) formée en travers et radialement à travers le deuxième palier unidirectionnel (22) à partir du segment large du creux actif (222) vers la surface extérieure du deuxième palier unidirectionnel (22), communiquant avec le creux actif (222) et ayant
une extrémité extérieure formée à travers la surface extérieure du deuxième palier unidirectionnel (22) ; et
une extrémité intérieure ;
un segment large ;
un segment étroit, et la tige d'embrayage (227) du creux actif (222) montée dans le segment étroit du creux actif (222) ;
un bloc fermé (224) monté dans l'extrémité extérieure de la canalisation (223) et fermant cette extrémité ; et
un ressort (225) monté dans la canalisation (223) et ayant deux extrémités, une des extrémités du ressort (225) butant contre le bloc fermé (224), et l'autre extrémité du ressort (225) sortant de l'extrémité intérieure de la canalisation (223) et montée dans le tube de montage (226) pour pousser le tube de montage (226) qui vient buter contre la tige d'embrayage (227).

4. Ensemble de transmission bidirectionnelle selon la revendication 3, dans lequel
la base (11) a une ouverture (113) formée à travers le sommet de la base (11) et communiquant avec le creux de montage (111) ;
le dispositif électrique (10) a une couronne dentée intérieure (12) montée dans l'ouverture (113) de la base (11) sur le creux de montage (111) ;
la monture de retenue (32) a
un sommet ;
un centre ; et
un arbre d'engrenage (322) formé sur le sommet de la monture de retenue (32), et dépassant de ce sommet, au centre de la monture de retenue (32) ; et
le dispositif de transmission (30) a une monture de réduction (33) montée sur la monture de retenue (32) entre l'arbre d'engrenage (322) et la couronne dentée intérieure (12), et ayant
un centre ;
un trou d'engrenage (331) formé à travers le centre de la monture de réduction (33) et monté autour de l'arbre d'engrenage (322) de la monture de retenue (32) ;
de multiples engrenages de réduction (332) raccordés en rotation à la monture de réduction (33) autour du trou d'engrenage (331), mettant en prise l'arbre d'engrenage (322) de la monture de retenue (32), et chaque engrenage de réduction (332) ayant une broche raccordée en rotation à la monture de réduction (33) ; et
un palier de position (333) monté autour de l'arbre d'engrenage (322) de la monture de retenue (32) au-dessous des engrenages de réduction (332) pour retenir la monture de réduction (33) dans la base (11) et monté autour du centre de la monture de réduction (33) pour permettre à la monture de réduction (33) de tourner par rapport à la monture de retenue (32).

5. Ensemble de transmission bidirectionnelle selon la revendication 4, dans lequel
la base (11) a de multiples plaques de montage (114) formées sur le sommet de la base (11), et dépassant de ce sommet, à intervalles autour de l'ouverture (113) ; et
la couronne dentée intérieure (12) est raccordée aux plaques de montage (114) de la base (11) et a
une surface externe ;
une surface interne ;
de multiples saillies de montage (121) formées sur la surface externe de la couronne dentée intérieure (12), et dépassant de cette surface, à intervalles et raccordées aux plaques de montage (114) de la base (11) ; et
de multiples dents formées sur la surface interne de la couronne dentée intérieure (12), et dépassant de cette surface, et entrant en prise avec les engrenages de réduction (332) de la monture de réduction (33).

6. Ensemble de transmission bidirectionnelle selon la revendication 5, dans lequel
le premier palier unidirectionnel (21) a de multiples trous filetés (218) formés à travers la face supérieure et la face inférieure du premier palier unidirectionnel (21) entre les creux actifs (212) ;
le deuxième palier unidirectionnel (22) a de multiples trous débouchants (228) formés à travers la face supérieure et la face inférieure du deuxième palier unidirectionnel (22) entre les creux actifs (222) et s'alignant respectivement avec les trous filetés (218) du premier palier unidirectionnel (21) ;
le dispositif bidirectionnel (20) a un élément d'espacement (23) monté dans le creux de montage (111) de la base (11) entre les paliers unidirectionnels (21, 22) et ayant un trou central (231) formé à travers l'élément d'espacement (23), monté autour de l'arbre d'entraînement (112) de la base (11) et s'alignant respectivement avec les trous de chemise (211, 221) des paliers unidirectionnels (21, 22) ; et
de multiples trous d'élément d'espacement (232) formés à travers l'élément d'espacement (23) autour du trou central (231) et s'alignant avec les trous débouchants (228) du deuxième palier unidirectionnel (22) et les trous filetés (218) du premier palier unidirectionnel (21) ; et
la monture de retenue (32) a de multiples boulons (323) montés respectivement à travers la monture de retenue (32), les trous débouchants (228) du deuxième palier unidirectionnel (22) et les trous d'élément d'espacement (232) de l'élément d'espacement (23) et vissés respectivement dans les trous filetés (218) du premier palier unidirectionnel (21) pour combiner la monture de retenue (32) fermement avec le palier unidirectionnel (21, 22) et l'élément d'espacement (23).

7. Outil électrique de transmission bidirectionnelle, comprenant un ensemble de transmission bidirectionnelle selon la revendication 1, **caractérisé en ce que** l'outil électrique de transmission bidirectionnelle a également
un couvercle supérieur (13) monté fermement sur la base (11) et ayant un fond monté sur le sommet de la base (11) ;
un sommet ; et
un trou d'arbre (132) formé à travers le sommet du couvercle supérieur (13) ;
et
un dispositif de sortie (40) monté dans le couvercle supérieur (13) du dispositif électrique (10), raccordé au dispositif de transmission (30) et ayant un arbre de transmission (41) raccordé au dispositif de transmission (30) ;
un manchon de transmission (42) monté en rotation autour de l'arbre de transmission (41) dans le couvercle supérieur (13) et ayant
un fond ;
un sommet ; et
de multiples blocs de percussion (423) formés sur le sommet du manchon de transmission (42), et dépassant de ce sommet, à intervalles, autour du arbre de transmission (41) ; et
un arbre de sortie (43) monté en rotation sur l'arbre de transmission (41) au-dessus du manchon de transmission (42), sortant du couvercle supérieur (13) pour raccorder différents types d'outils et ayant
une extrémité inférieure ;
une extrémité supérieure sortant du couvercle supérieur (13) ;
une surface externe ; et
de multiples ailes (432) formées sur la surface externe de l'arbre de sortie (43), et dépassant de cette surface, au niveau de l'extrémité inférieure entre les blocs de percussion (423) du manchon de transmission (42).

8. Outil électrique de transmission bidirectionnelle selon la revendication 7, dans lequel
la chemise de transmission (31) a une plaque de position (311) formée sur l'extrémité supérieure de la chemise de transmission (31) et butant contre la face supérieure du deuxième palier unidirectionnel (22) ; et
la monture de retenue (32) a
un fond ; et
un creux de position (321) formé dans le fond de la monture de retenue (32) et monté autour de la plaque de position (311) de la chemise de transmission (31) pour réaliser une transmission stable entre la chemise de transmission (31) et la monture de retenue (32).

9. Outil électrique de transmission bidirectionnelle selon la revendication 7 ou 8, dans lequel
chaque creux actif (212) du premier palier unidirectionnel (21) a une canalisation (213) formée à travers le premier palier unidirectionnel (21) à partir du creux actif (212) vers la surface extérieure du premier palier unidirectionnel (21), communiquant avec le creux actif (212) et ayant
une extrémité extérieure formée à travers la surface extérieure du premier palier unidirectionnel (21) ; et
une extrémité intérieure ;
un segment large étant défini dans le creux actif (212) et communiquant avec l'extrémité intérieure de la canalisation (213) ;
un segment étroit étant défini dans le creux actif (212) à distance de la canalisation (213) et communiquant avec le segment large du creux actif (212), et la tige d'embrayage (217) du creux actif (212) montée dans le segment étroit du creux actif (212) ;
un bloc fermé (214) monté dans l'extrémité extérieure de la canalisation (213) et fermant cette extrémité ; et
un ressort (215) monté dans la canalisation (213) et ayant deux extrémités, une des extrémités du ressort (215) butant contre le bloc fermé (214) , et l'autre extrémité du ressort (215) sortant de l'extrémité intérieure de la canalisation (213) et montée dans le tube de montage (216) pour pousser le tube de montage (216) qui vient buter contre la tige d'embrayage (217) ; et
chaque creux actif (222) du deuxième palier unidirectionnel (22) a une canalisation (223) formée en travers et radialement à travers le deuxième palier unidirectionnel (22) à partir du segment large du creux actif (222) vers la surface extérieure du deuxième palier unidirectionnel (22), communiquant avec le creux actif (222) et ayant
une extrémité extérieure formée à travers la surface extérieure du deuxième palier unidirectionnel (22) ; et
une extrémité intérieure formée à travers le segment large du deuxième palier unidirectionnel (22) ;
un segment large ;
un segment étroit, et la tige d'embrayage (227) du creux actif (222) montée dans le segment étroit du creux actif (222) ;
un bloc fermé (224) monté dans l'extrémité extérieure de la canalisation (223) et fermant cette extrémité ; et
un ressort (225) monté dans la canalisation (223) et ayant deux extrémités, une des extrémités du ressort (225) butant contre le bloc fermé (224), et l'autre extrémité du ressort (225) sortant de l'extrémité intérieure de la canalisation (223) et montée dans le tube de montage (226) pour pousser le tube de montage (226) qui vient buter contre la tige d'embrayage (227).

10. Outil électrique de transmission bidirectionnelle selon la revendication 9, dans lequel
la base (11) a une ouverture (113) formée à travers le sommet de la base (11) et communiquant avec le creux de montage (111) ;
le dispositif électrique (10) a une couronne dentée intérieure (12) montée dans l'ouverture (113) de la base (11) sur le creux de montage (111) ;
la monture de retenue (32) a
un sommet ;
un centre ; et
un arbre d'engrenage (322) formé sur le sommet de la monture de retenue (32), et dépassant de ce sommet, au centre de la monture de retenue (32) ;
le dispositif de transmission (30) a une monture de réduction (33) montée sur la monture de retenue (32) entre l'arbre d'engrenage (322) et la couronne dentée intérieure (12), et ayant
un centre ;
un trou d'engrenage (331) formé à travers le centre de la monture de réduction (33) et monté autour de l'arbre d'engrenage (322) de la monture de retenue (32) ;
de multiples engrenages de réduction (332) raccordés en rotation à la monture de réduction (33) autour du trou d'engrenage (331), mettant en prise l'arbre d'engrenage (322) de la monture de retenue (32), et chaque engrenage de réduction (332) ayant une broche raccordée en rotation à la monture de réduction (33) ; et
un palier de position (333) monté autour de l'arbre d'engrenage (322) de la monture de retenue (32) au-dessous des engrenages de réduction (332) pour retenir la monture de réduction (33) dans la base (11), et monté autour du centre la monture de réduction (33) pour permettre à la monture de réduction (33) de tourner par rapport à la monture de retenue (32) ; et
l'arbre de transmission (41) a une extrémité inférieure montée autour de l'arbre d'engrenage (322) et raccordée aux broches des engrenages de réduction (332).

11. Outil électrique de transmission bidirectionnelle selon la revendication 10, dans lequel
la base (11) a de multiples plaques de montage (114) formées sur le sommet de la base (11), et dépassant de ce sommet, à intervalles autour de l'ouverture (113) ; et
la couronne dentée intérieure (12) est raccordée aux plaques de montage (114) de la base (11) et a
un surface externe ;
une surface interne ;
de multiples saillies de montage (121) formées sur la surface externe de la couronne dentée intérieure (12) et dépassant de cette surface, à intervalles, et raccordées aux plaques de montage (114) de la base (11) ; et
de multiples dents formées sur la surface interne de la couronne dentée intérieure (12), et dépassant de cette surface, et entrant en prise avec les engrenages de réduction (332) de la monture de réduction (33).

12. Outil électrique de transmission bidirectionnelle selon la revendication 11, dans lequel
l'arbre de transmission (41) a
une extrémité supérieure ; et
une tige pivotante (411) formée sur l'extrémité supérieure de l'arbre de transmission (41), et dépassant de cette extrémité ;
l'arbre de sortie (43) a un creux pivotant (431) formé dans l'extrémité inférieure de l'arbre de sortie (43) et monté autour de la tige pivotante (411) de l'arbre de transmission (41).

13. Outil électrique de transmission bidirectionnelle selon la revendication 12, dans lequel
le premier palier unidirectionnel (21) a de multiples trous filetés (218) formés à travers la face supérieure et la face inférieure du premier palier unidirectionnel (21) entre les creux actifs (212) ;
le deuxième palier unidirectionnel (22) a de multiples trous débouchants (228) formés à travers la face supérieure et la face inférieure du deuxième palier unidirectionnel (22) entre les creux actifs (222) et s'alignant respectivement avec les trous filetés (218) du premier palier unidirectionnel (21) ;
le dispositif bidirectionnel (20) a un élément d'espacement (23) monté dans le creux de montage (111) de la base (11) entre les paliers unidirectionnels (21, 22) et ayant un trou central (231) formé à travers l'élément d'espacement (23), monté autour de l'arbre d'entraînement (112) de la base (11) et s'alignant respectivement avec les trous de chemise (211, 221) des paliers unidirectionnels (21, 22) ; et
de multiples trous d'élément d'espacement (232) formés à travers l'élément d'espacement (23) autour du trou central (231) et s'alignant avec les trous débouchants (228) du deuxième palier unidirectionnel (22) et les trous filetés (218) du premier palier unidirectionnel (21) ; et
la monture de retenue (32) a de multiples boulons (323) montés respectivement à travers la monture de retenue (32), les trous débouchants (228) du deuxième palier unidirectionnel (22) et les trous d'élément d'espacement (232) de l'élément d'espacement (23), et vissés respectivement dans les trous filetés (218) du premier palier unidirectionnel (21) pour combiner la monture de retenue (32) fermement avec le palier unidirectionnel (21, 22) et l'élément d'espacement (23).

14. Outil électrique de transmission bidirectionnelle selon la revendication 13, dans lequel le manchon de transmission (42) a
un creux de ressort (421) formé dans le fond du manchon de transmission (42) autour de l'arbre de transmission (41) ; et
un ressort de torsion (422) monté dans le creux de ressort (421) du manchon de transmission (42) autour de l'arbre de transmission (41) et ayant deux extrémités, une des extrémités du ressort de torsion (422) raccordée au manchon de transmission (42) dans le creux de ressort (421), et l'autre extrémité du ressort de torsion (422) fermement raccordée à l'extrémité inférieure de l'arbre de transmission (41).

15. Outil électrique de transmission bidirectionnelle selon la revendication 14, dans lequel le couvercle supérieur (13) a de multiples éléments de fixation (131) montés dans le fond du couvercle supérieur (13) et raccordés fermement au sommet de la base (11).
